# FASCICULE DE BREVET EUROPEEN

(11) **EP 0 433 100 B1**
(45) Date de publication et mention de la délivrance du brevet: **13.04.1994**
(21) Numéro de dépôt: 90402835.4
(22) Date de dépôt: 10.10.1990
(51) Int. Cl.: A47C 31/02

(54) **Dispositif de rappel de la coiffe d'un siège automobile**
Vorrichtung zum Befestigen eines Überzuges eines Kraftzeugsitzes
Device for attaching a seat cover to a motor car seat

(30) Priorité: 11.12.1989 FR 8916354
(43) Date de publication de la demande: 19.06.1991
(73) Titulaire: AUTOMOBILES PEUGEOT, 75116 Paris (FR); AUTOMOBILES CITROEN, 92200 Neuilly-sur-Seine (FR)
(72) Inventeur: Picard, Jean, F-92700 Colombes (FR)
(74) Mandataire: Moncheny, Michel

(56) Documents cités:
- EP-A- 0 231 692
- EP-A- 0 240 388
- EP-A- 0 252 783
- DE-A- 3 037 834

## Description

L'invention concerne un siège destiné, notamment, mais non exclusivement, à l'équipement d'un véhicule automobile.

L'invention s'applique à un siège constitué d'un coussin sur lequel on s'assied et d'un dossier, chacun de ces deux éléments constitutifs du siège étant pourvu d'une matelassure recouverte d'une coiffe; le siège comporte également, de façon habituelle, une armature et/ou des inserts rigides de renforcement placés dans la matelassure.

Afin d'assurer une bonne tenue de la coiffe et un aspect esthétique au siège, on forme de façon courante, sur la face externe du siège sur laquelle vient s'appuyer l'utilisateur, des parties en creux obtenues par un rappel de la coiffe vers la face opposée du siège, c'est-à-dire vers l'intérieur de la matelassure. De tels rappels peuvent être prévus sur le dossier et/ou le coussin.

On a également proposé dans le brevet français n° 2 596 626 un moyen de rappel constitué par une bande de toile solidaire d'un élément rigide réalisé sous la forme d'une poutre en matière plastique dans laquelle la bande de toile est enrobée et prise le long de son bord opposé à la coiffe.

Ainsi la bande de toile constitue avec la poutre une seule pièce souple ayant un bord rigide et est fixée à la coiffe par des moyens d'accrochage répartis suivant la longueur de la poutre pour coopérer avec des éléments de fixation associés à la matelassure ou à l'armature.

Cependant, dans ce dispositif, l'effort d'arrachement permanent s'exerce dans la direction d'engagement des moyens d'accrochage sur les moyens de fixation, si bien qu'il existe un risque important de décrochage du moyen de rappel et, par conséquent, d'un mauvais positionnement de la coiffe sur son support. De plus, il peut être nécessaire d'exécuter un effort relativement important sur le moyen de rappel pour assurer son accrochage.

Le but de l'invention est donc de proposer un siège, notamment un siège pour véhicule automobile, comportant un coussin et un dossier, chacun pourvu d'une matelassure recouverte d'une coiffe et comportant, éventuellement, une armature et/ou des inserts rigides de renforcement placés dans la matelassure, l'un au moins des deux éléments constitutifs, à savoir le coussin et le dossier étant équipés d'au moins un moyen de rappel de la coiffe en direction de la matelassure pour former des parties en creux sur la face externe du siège sur laquelle vient s'appuyer l'utilisateur, le moyen de rappel étant constitué par une première bande souple fixée à la coiffe au voisinage de l'un de ses bords et reliée le long de son bord opposé à un élément rigide ayant la forme d'une poutre et comportant des éléments d'accrochage, de manière à éviter les inconvénients de l'art antérieur et, en particulier, les risques de décrochage du moyen de rappel et les difficultés de pose de ce moyen de rappel.

Dans ce but, un moyen de fixation constitué par une seconde bande souple solidaire d'un second élément rigide réalisé sous la forme d'une poutre est fixé par enrobage dans la matelassure, le second élément rigide comportant des moyens d'accrochage répartis suivant sa longueur destinés à coopérer avec des éléments d'accrochage correspondants répartis suivant la longueur du premier élément rigide pour rappeler celui-ci vers la matelassure.

De manière avantageuse, la seconde bande souple est constituée de mailles permettant l'enrobage de celle-ci dans la matelassure formée de mousse, la toile étant enrobée dans la mousse de la matelassure au moment du moulage de celle-ci.

Suivant un premier mode de réalisation, les moyens d'accrochage répartis suivant la longueur de la première poutre sont constitués par des ouvertures de forme arrondie et les éléments d'accrochage correspondants répartis suivant la longueur de la seconde poutre rigide sont constitués par des pattes ayant la forme de crochets.

Suivant un second mode de réalisation, les moyens d'accrochage répartis suivant la longueur de la première poutre sont constitués par des pattes ayant la forme de crochets et les éléments d'accrochage correspondants répartis suivant la longueur de la seconde poutre sont constitués par des ouvertures de forme arrondie.

Avantageusement, la seconde poutre rigide est réalisée à partir d'une matière plastique, la bande de toile à mailles étant enrobée et prise le long d'un de ses bords dans la matière plastique constituant la poutre.

La seconde poutre rigide peut être réalisée sous forme d'une pièce unique avec les moyens d'accrochage par une opération de moulage par injection.

Elle peut également être réalisée par extrusion d'une matière plastique, la toile étant enrobée dans la matière plastique à la sortie de la filière d'extrusion et les éléments d'accrochage étant rapportés sur la poutre.

Comme matériau constituant la seconde poutre rigide, on préfère en particulier le polypropylène.

L'invention sera mieux comprise grâce à la description qui suit et aux figures annexées dans lesquelles :
- la Figure 1 est une vue en perspective et en coupe d'un siège comportant plusieurs parties en creux formées par des moyens de rappel de la coiffe suivant l'invention;
- la Figure 2 est une vue en perspective agrandie avec arrachement d'un premier mode de réalisation du moyen de rappel de la coiffe suivant l'invention;
- la Figure 3 est une vue en perspective agrandie avec arrachement d'un second mode de réalisation du moyen de rappel de la coiffe suivant l'invention.

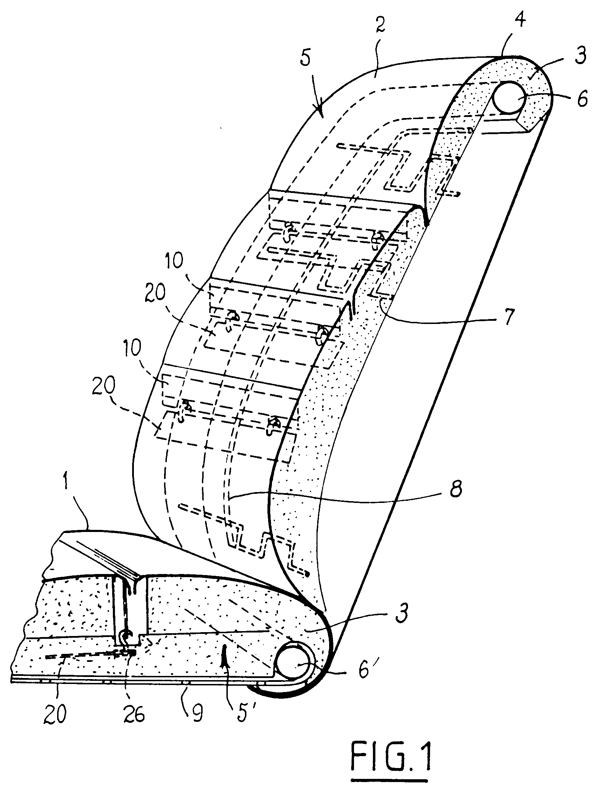

Sur la Figure 1, on voit un siège pour véhicule automobile comportant un coussin 1 sur lequel on s'assied et un dossier 2. Chacune des deux parties 1 et 2 du siège comporte une matelassure 3 recouverte d'une coiffe 4. La matelassure 3 est renforcée par une armature 5 en ce qui concerne le dossier 2. Cette armature 5 comporte une partie tubulaire rigide 6, des fils 7 de direction transversale pliés en créneaux et des éléments de renforcement longitudinaux 8. Le coussin 1 du siège comporte un ensemble de renforcement 5' analogue comportant une partie tubulaire rigide 6'.

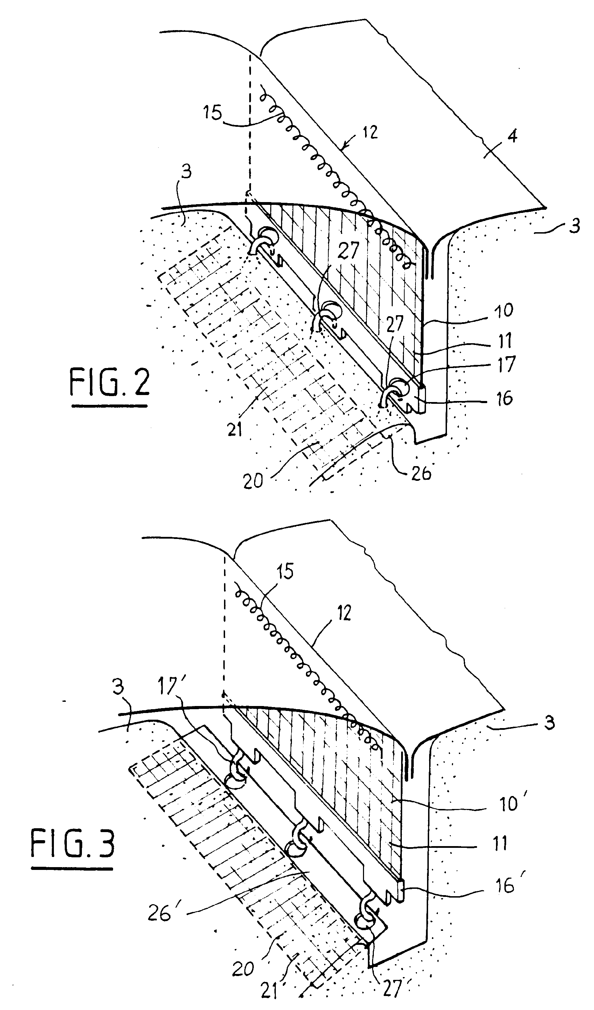

On a également représenté sur la Figure 1, un ensemble de dispositifs de rappel 10 suivant l'invention et suivant un premier mode de réalisation qui seront décrits plus en détail en se référant à la Figure 2.

Ainsi qu'il est visible sur la Figure 1, la matelassure 3 du coussin 1 est interrompue au niveau du moyen de rappel 10 pour permettre son introduction dans l'épaisseur du siège.

Comme il est visible sur le mode de réalisation de la Figure 2, le moyen de rappel désigné de façon générale par le repère 10 est constitué par une bande de toile 11 fixée au niveau de son bord supérieur à la coiffe 4 du siège, le long d'un repli ou d'un raccord bord à bord de cette coiffe, pour constituer une partie en creux 12, par rappel de la coiffe vers l'intérieur de la matelassure 3.

Le bord inférieur de la toile 11 est rendu solidaire d'une poutre rigide 16 présentant des ouvertures arrondies 17.

La bande de toile 11 peut être constituée par un morceau de toile de coton, de nylon ou de tout autre textile naturel ou synthétique ayant une résistance suffisante et pouvant être enrobé et solidarisé dans la matière fusible constituant la poutre 16. La toile 11 peut être tricotée ou tissée ou encore obtenue par tout autre procédé d'assemblage de fils textiles.

La matière fusible de la poutre 16 est généralement une matière plastique et la liaison de cette poutre 16 et de la toile 11 peut être obtenue par surmoulage.

La toile 11 peut être reliée à la coiffe 4 par piqûre suivant une ligne de jonction cousue 15.

Suivant la nature de la toile 11 et de la coiffe, cette jonction pourrait être également réalisée par soudure, collage ou agrafage.

Le moyen de rappel 10 coopère avec un second moyen noyé dans la matelassure 3 désigné de façon générale par le repère 20.

Le moyen 20 est constitué par une seconde toile 21 formée de mailles dont l'un des bords est rendu solidaire d'une seconde poutre rigide 26 portant des moyens d'accrochage 27 constitués par des pattes ayant la forme de crochets dont la disposition, la forme et la dimension permettent leur engagement dans les ouvertures 17 du moyen de rappel 10.

La toile 21 ainsi que la poutre 26 sont noyées dans la matelassure.

La toile 21 formée de mailles assure un maintien efficace de la poutre dans la matelassure; en effet, la poutre qui comporte une surface lisse, ne pourrait pas être fixée efficacement par simple enrobage dans la mousse de la matelassure, alors que la mousse pénètre et se solidifie dans chacune des mailles de la toile 21 qui se trouve complètement incorporée dans la mousse de la matelassure.

La bande de toile 21 peut être constituée par un morceau de toile de coton, de nylon ou de tout autre textile naturel et synthétique ayant une résistance suffisante et pouvant être enrobée et solidarisée dans la matière fusible constituant la poutre 26. La toile 21 peut être tricotée ou tissée ou encore être obtenue par tout autre procédé d'assemblage de fils textiles et comporter des mailles ayant une ouverture suffisante pour permettre la pénétration de la mousse à travers l'ouverture.

La matière de la poutre 26 est préférentiellement une matière plastique.

La poutre 26 peut être réalisée notamment par extrusion à travers une filière d'une bande de plastique et pourvue de pattes en forme de crochets 27 rapportées sur celle-ci. A la sortie de la filière d'extrusion, un bord de la toile 21 est introduit et enrobé dans la matière plastique en fusion.

Au refroidissement, la toile 21 formée de mailles est ainsi solidarisée à la poutre 26. Le système ainsi obtenu est alors placé dans le moule servant à fabriquer la matelassure en mousse du siège de manière à ce que les crochets et éventuellement la poutre 26 ne soient pas noyés dans la mousse. Le passage de la mousse au travers de la toile ainsi ajourée permet le maintien en place du système après durcissement de la mousse comme indiqué plus haut.

Le moyen de rappel 10 est réalisé suivant le même principe, par extrusion d'une bande de matière plastique dans laquelle on prévoit des ouvertures et par introduction dans la matière plastique en fusion du bord inférieur de la toile 11 de manière à la rendre solidaire de la poutre 16.

La Figure 3 représente un second mode de réalisation du moyen de rappel et de son système d'accrochage selon l'invention.

Dans ce mode de réalisation, la poutre rigide 16' au lieu de comporter des ouvertures porte des pattes ayant la forme de crochets 17'.

Le second moyen 20' coopérant avec le moyen de rappel 10' comporte comme précédemment décrit, une toile 21' formée de mailles solidaires, noyée dans la matelassure et une poutre rigide 26' comportant des ouvertures 27' de forme arrondie correspondant aux crochets 17'.

Le moyen de rappel suivant la présente invention présente l'avantage que la première bande souple 10 et l'élément rigide 16 coopèrent avec des moyens d'accrochage fixés dans la matelassure dans des positions et suivant une orientation qui peuvent être choisies de manière à faciliter le montage et à rendre la fixation du moyen de rappel plus efficace et plus sûre. En particulier, dans le cas du premier mode de réalisation, les forces d'arrachement ne s'exercent plus dans la direction d'engagement des éléments d'ancrage de la première bande souple, ce qui assure une fixation plus résistante et plus fiable. Les forces d'arrachement sont reprises dans la direction longitudinale de l'élément inclus dans la matelassure et sont réparties sur l'ensemble de la surface de la toile et de la poutre noyées dans la matelassure.

En outre, par rapport au système décrit dans FR 2 596 626, le montage du moyen de rappel est facilité dans la mesure où il n'est plus nécessaire d'appuyer fortement pour engager les éléments d'accrochage de la première bande souple sur des moyens de fixation tels que des treillis ou des tiges.

On peut, en outre, imaginer l'utilisation de toute matière appropriée pour constituer les bandes souples, par exemple feuille de matière plastique perforée ou poinçonnée, les poutres, et les moyens d'accrochage dans la matelassure.

Enfin, l'invention peut s'appliquer également à des sièges différents de sièges destinés à des véhicules automobiles.

## Revendications

1. Siège, notamment siège pour véhicule automobile, comportant un coussin (1) et un dossier (2), chacun pourvu d'une matelassure (3) recouverte d'une coiffe (4) et comportant une armature et/ou des inserts rigides de renforcement placés dans la matelassure (3), l'un au moins des deux éléments constitutifs, à savoir le coussin (1) et le dossier (2), étant équipé d'au moins un moyen de rappel (10) de la coiffe (4) en direction de la matelassure (3) pour former une partie en creux (12) sur la face externe du siège sur laquelle vient s'appuyer l'utilisateur, moyen de rappel constitué par une première bande souple (11, 11') fixée à la coiffe (4) au voisinage de l'un de ses bords et reliée le long de son bord opposé à un premier élément rigide (16, 16') ayant la forme d'une poutre comportant des moyens d'accrochage (17, 17'), caractérisé en ce qu'un moyen de fixation (20, 20') constitué par une seconde bande souple (21, 21') solidaire d'un second élément rigide (26, 26') réalisé sous la forme d'une poutre est fixé par enrobage dans la matelassure, le second élément rigide comportant des moyens d'accrochage (27, 27') répartis suivant sa longueur destinés à coopérer avec des éléments d'accrochage (17, 17') correspondants répartis suivant la longueur du premier élément rigide (16, 16') pour rappeler celui-ci vers la matelassure (3).

2. Siège selon la revendication 1, caractérisé en ce que la seconde bande souple (21, 21') est une bande de toile constituée de mailles permettant l'enrobage de celle-ci dans la matelassure (3) formée de mousse.

3. Siège suivant la revendication 2, caractérisé en ce que la seconde bande de toile (21, 21') formée de mailles est enrobée dans la matelassure formée de mousse au moment du moulage de la matelassure.

4. Siège suivant l'une quelconque des revendications 1 à 3, caractérisé en ce que les moyens d'accrochage (17) répartis suivant la longueur du premier élément rigide (16) sont constitués par des ouvertures de forme arrondie et les éléments d'accrochage (27) correspondants répartis suivant la longueur du second élément rigide (26) sont constitués par des pattes ayant la forme de crochets.

5. Siège suivant l'une quelconque des revendication 1 à 3, caractérisé en ce que les moyens d'accrochage (17') répartis suivant la longueur du premier élément rigide sont constitués par des pattes munies de crochets et les éléments d'accrochage correspondants (27') répartis suivant la longueur du second élément rigide sont constitués par des ouvertures.

6. Siège suivant l'une quelconque des revendications précédentes, caractérisé en ce que la seconde poutre rigide (26, 26') est réalisée à partir d'une matière plastique, la bande souple (21, 21') étant enrobée et prise le long d'un de ses bords dans la matière plastique constituant la poutre (26, 26').

7. Siège suivant l'une quelconque des revendications précédentes, caractérisé en ce que la seconde poutre rigide (26, 26') est réalisée sous forme d'une pièce unique avec les moyens d'accrochage (27, 27') par une opération de moulage par injection.

8. Siège suivant l'une quelconque des revendications 1 à 6, caractérisé en ce que la seconde poutre rigide (26, 26') est réalisée par extrusion d'une matière plastique, la toile étant enrobée dans la matière plastique à la sortie de la filière d'extrusion et les dispositifs d'accrochage (27, 27') étant rapportés sur la poutre.

9. Siège suivant l'une quelconque des revendications précédentes, caractérisé en ce que la seconde poutre (26, 26') est en polypropylène.

## Patentansprüche

1. Sitz, insbesondere Kraftfahrzeugsitz, umfassend ein Sitzpolster (1) und eine Rückenlehne (2), die jeweils mit einer mit einem Bezug (4) bedeckten Polsterung (3) versehen sind und ein Gestell und/oder starre Verstärkungseinlagen besitzen, die in der Polsterung (3) angeordnet sind, wobei wenigstens einer der beiden Bestandteile Sitzpolster (1) und Rückenlehne (2) mit wenigstens einem Mittel (10) zum Zurückholen des Bezugs (4) in Richtung auf die Polsterung (3) versehen ist, um auf der Außenseite des Sitzes, an der sich der Benutzer abstützt, eine Vertiefung (12) zu bilden, wobei das Rückholmittel aus einem ersten biegsamen Band (11, 11') besteht, das am Bezug (4) in Nähe eines seiner Ränder befestigt ist und längs seines entgegengesetzten Randes mit einem ersten starren Element (16, 16') in Form einer Leiste mit Einhakmitteln (17, 17') verbunden ist, dadurch gekennzeichnet, daß ein Befestigungsmittel (20, 20'), das aus einem zweiten biegsamen Band (21, 21') besteht, das mit einem zweiten starren Element (26, 26') in Form einer Leiste fest verbunden ist, durch Einbettung in der Polsterung befestigt ist, wobei das zweite starre Element auf seiner Länge verteilte Einhakmittel (27, 27') besitzt, die mit entsprechenden auf der Länge des ersten starren Elements (16, 16') verteilten Einhakelementen (17, 17') zusammenwirken, um dieses auf die Polsterung (3) zu zurückzuholen.

2. Sitz nach Anspruch 1, dadurch gekennzeichnet, daß das zweite biegsame Band (21, 21') ein Stoffband ist, das aus Maschen besteht, die seine Einbettung in die aus Schaumstoff gebildete Polsterung (3) gestatten.

3. Sitz nach Anspruch 2, dadurch gekennzeichnet, daß das zweite aus Maschen gebildete Stoffband (21, 21') zum Zeitpunkt der Formung der aus Schaumstoff bestehenden Polsterung in diese eingebettet ist.

4. Sitz nach einem der Ansprüche 1 bis 3, dadurch gekennzeichnet, daß die auf der Länge des ersten starren Elements (16) verteilten Einhakmittel (17) aus Öffnungen mit abgerundeter Form und die entsprechenden auf der Länge des zweiten starren Elements (26) verteilten Einhakelemente (27) aus hakenförmigen Klauen bestehen.

5. Sitz nach einem der Ansprüche 1 bis 3, dadurch gekennzeichnet, daß die auf der Länge des ersten starren Elements verteilten Einhakmittel (17') aus mit Haken versehenen Klauen und die entsprechenden auf der Länge des zweiten starren Elements verteilten Einhakelemente (27') aus Öffnungen bestehen.

6. Sitz nach einem der vorhergehenden Ansprüche, dadurch gekennzeichnet, daß die zweite starre Leiste (26, 26') aus einem Kunststoff hergestellt ist, wobei das biegsame Band (21, 21') längs eines seiner Ränder in dem die Leiste (26, 26') bildenden Kunststoff eingebettet und ergriffen ist.

7. Sitz nach einem der vorhergehenden Ansprüche, dadurch gekennzeichnet, daß die zweite starre Leiste (26, 26') einstückig mit den Einhakmitteln (27, 27') durch einen Spritzgußvorgang hergestellt ist.

8. Sitz nach einem der Ansprüche 1 bis 6, dadurch gekennzeichnet, daß die zweite starre Leiste (26, 26') durch Extrudieren eines Kunststoffs gebildet ist, wobei der Stoff bei Austritt aus der Extrusionsdüse in den Kunststoff eingebettet ist und die Einhakvorrichtungen (27, 27') an der Leiste eingehakt sind.

9. Sitz nach einem der vorhergehenden Ansprüche, dadurch gekennzeichnet, daß die zweite Leiste aus Polypropylen besteht.

## Claims

1. A seat, in particular for a motor vehicle, comprising a seat pad (1) and a seat back (2), each provided with a padding (3) covered by a cover (4) and comprising a reinforcement and/or rigid reinforcement inserts placed into the padding (3), at least one of the two constituent elements, that is to say the seat pad (1) and the seat back (2), being fitted with at least one means (10) for drawing in the cover (4) towards the padding (3), so as to form a recessed portion (12) on the outer side of the seat whereon the user will come to lean, which drawing-in means (10) is constituted by a first flexible strap (11, 11'), fixed to the cover (4) near one of its edges and connected along its opposite edge to a first rigid element (16, 16') having the shape of a bar comprising attachment means (17, 17'), characterized in that a fixing means (20, 20') constituted by a second flexible strap (21, 21') joined to a second rigid element (26, 26') made in the form of a bar is secured in the padding by embedding, the second rigid element comprising attachment means (27, 27') distributed along its length and intended to cooperate with the corresponding attachment means (17, 17') distributed along the length of the first rigid element (16, 16') to draw in the latter towards the padding (3).

2. A seat according to claim 1, characterized in that the second flexible strap (21, 21') is a cloth strap made up of meshes allowing it to be embedded in the padding (3) formed of foam.

3. A seat according to claim 2, characterized in that the second cloth strap (21, 21') formed of meshes is embedded in the padding formed of foam at the time the padding is moulded.

4. A seat according to any one of claims 1 to 3, characterized in that the attachment means (17) distributed along the length of the first rigid element (16) are constituted by openings of a rounded shape and the corresponding attachment means (27) distributed along the length of the second rigid element (26) are constituted by hook-shaped tabs.

5. A seat according to any one of claims 1 to 3, characterized in that the attachment means (17') distributed along the length of the first rigid element are formed by tabs that are provided with hooks and the corresponding attachment means (27') distributed along the length of the second rigid element are constituted by openings.

6. A seat according to any one of the preceding claims, characterized in that the second rigid bar (26, 26') is made of a plastic material, the flexible strap (21, 21') being embedded and taken along one of its edges in the plastic material constituting the bar (26, 26').

7. A seat according to any one of the preceding claims, characterized in that the second rigid bar (26, 26') is obtained in the form of an integral part together with the attachment means (27, 27') in an injection moulding operation.

8. A seat according to any one of claims 1 to 6, characterized in that the second rigid bar (26, 26') is obtained by the extrusion of a plastic material, the cloth being embedded in the plastic material on emergence from the extrusion die, and the attachment means (27, 27') being attached to the bar.

9. A seat according to any one of the preceding claims, characterized in that the second rigid bar (26, 26') is made of polypropylene.
